# EUROPEAN PATENT APPLICATION

(11) **EP 4 844 973 A1**
(43) Date of publication of application: **25.11.2026**
(21) Application number: 26178802.0
(22) Date of filing: 14.05.2026
(51) Int. Cl.: H02J 3/32, B60L 53/63, B60L 55/00, H02J 13/18, H02J 105/30

(54) **MANAGING ENERGY COSTS AT AN ELECTRICAL SITE**

(30) Priority: 21.05.2025 US 202563809610 P
(71) Applicant: Eaton Intelligent Power Limited, Dublin 4 (IE)
(72) Inventor: Kapoor, Aastha, 411028 Pune, Maharashtra (IN); Balasubramanian, Pranavamoorthy, 400028 Pune, Maharashtra (IN); Puradbhat, Sumedh, 411013 Pune, Maharashtra (IN); Suryanarayanan, Siddharth, 80602 Thornton, Colorado (US)
(74) Representative: Collingwood-Pierce, Alexandra Isobel Seymour

(57) **Abstract**

A control module is configured to access an availability parameter of a rechargeable electrical device (ED). The availability parameter is associated with a time period beginning at a first time and ending at a second time, and the first time is a time at which the rechargeable ED connects to an electrical charger at an electrical site and the second time is time at which the rechargeable ED disconnects from the electrical charger at the electrical site. The control module is also configured to access a generation parameter associated with a scheduling window that includes the time period. The generation parameter depends on one or more of energy available from a local power source at the electrical site over the scheduling window and energy from an external power source over the scheduling window. The control module is also configured to: determine an operation mode parameter of the rechargeable ED based on the availability parameter and the generation parameter, the operation mode parameter indicating whether the rechargeable ED draws electrical energy from the electrical charger at each of a plurality of times in the time period; and control the electrical charger based on the operation mode parameter.

## Description

### TECHNICAL FIELD

This disclosure relates to techniques for managing energy costs at an electrical site.

### BACKGROUND

An electrical site can have an electrical load that varies over time. For example, an electrical site that includes an electrical charging facility for electric vehicles (EV) and additional fixed electric loads may have a total electrical load that varies over time.

### SUMMARY

In one aspect, a method for managing at least one distributed energy resource (DER) and electric vehicle (EV) load at an electrical load site is performed by at least one processor. The method includes: generating an estimate of a peak shave limit at the electrical load site for a future period of time, the estimate being generated at least in part based on a fixed non-EV load and an EV load at the electrical load site, the EV load having one more characteristics that vary in time, and the EV load being one or more of a controllable load and an non-controllable load; using, in real time, at least the estimate of the peak shave limit and an EV-related data at the electric load site to dynamically forecast an optimal control of the at least one DER and an optimal control of the EV load at the electrical load site. If the EV load is the controllable load, a forecast of the optimal control of the EV load considers at least charging and/or discharging characteristics of the EV load. The method also includes generating one or more dispatch commands associated with the forecast of the optimal control of the at least one DER and the optimal control of the EV load at the electrical load site, the one or more dispatch commands including at least one first dispatch command that directs the optimal control of the at least one DER at the electrical load site, and (ii) at least one second dispatch command that directs the optimal control of the EV load at the electrical load site, the optimal control of the EV load being based at least in part on scheduling of an EV charging at the electrical load site.

Implementations may include one or more of the following features.

The method also may include determining whether to modify any of the one or more dispatch commands by comparing the one or more dispatch commands to one or more rules; and if any of the one or more dispatch commands do not comply with at least one rule, updating the one or more dispatch commands.

In some implementations, the one or more dispatch commands are a first set of dispatch commands, and a second set of dispatch commands are generated from the first set of set of dispatch commands, the second set of dispatch commands being generated from the first set dispatch commands based on at least on one or more real-time variations of the fixed non-EV load and one or more real-time variations of the EV load.

In another aspect, a control module is configured to access an availability parameter of a rechargeable electrical device (ED). The availability parameter is associated with a time period beginning at a first time and ending at a second time, and the first time is a time at which the rechargeable ED connects to an electrical charger at an electrical site and the second time is time at which the rechargeable ED disconnects from the electrical charger at the electrical site. The control module is also configured to access a generation parameter associated with a scheduling window, the generation parameter depending on one or more of energy available from a local power source at the electrical site over the scheduling window and energy from an external power source over the scheduling window. The scheduling window includes the time period. The control module is also configured to: determine an operation mode parameter of the rechargeable ED based on the availability parameter and the generation parameter, the operation mode parameter indicating whether the rechargeable ED draws electrical energy from the electrical charger at each of a plurality of times in the time period; and control the electrical charger based on the operation mode parameter.

Implementations may include one or more of the following features.

The operating mode parameter may indicate whether the rechargeable ED draws electrical energy from the electrical charger or provides electrical energy to the electrical charger at each of the plurality of times in the time period.

The control module also may be configured to access an indication of a fixed electrical load associated with the electrical site, and, in these implementations, the control module is configured to determine the operational mode parameter based on the availability parameter, the generation parameter, and the indication of the fixed electrical load. The generation parameter also may include one or more of a cost associated with the local power source at each of the plurality of times, a cost associated with the energy from the external power source at the plurality of times, and a penalty cost at the plurality of times. The indication of the fixed electrical load associated with the electrical site may be a forecast of the fixed electrical load over the scheduling window.

The control module also may be configured to determine a dispatch command and to control one or more energy sources in the local power source with the dispatch command.

The time period and the scheduling window may be coextensive.

In another aspect, a method includes performing an initial optimization for control of a rechargeable electrical device (ED) load at an electrical site for a future period of time, the initial optimization being based at least in part on characteristics of the rechargeable ED load at the electrical site and a schedule of a charging or discharging power of the rechargeable ED load; and controlling one or more electrical chargers at the electrical load site in accordance with the schedule of the charging or discharging power of the rechargeable ED load.

Implementations may include one or more of the following features.

The method may include performing an initial optimization of a control of at least one distributed energy resource (DER) at the electrical site.

Performing the initial optimization may include estimating a peak shave limit. The method also may include updating the peak shave limit after a first amount of time has passed, the first amount of time is less than the future period of time and occurs before the future period of time ends. Controlling the one or more electrical chargers may include controlling the one or more electrical charges using one or more of a linear power control or an on-off control.

The method also may include performing at least peak shaving at the electrical site based on the initial optimization.

The rechargeable ED may be an electric vehicle (EV), and the characteristics of the rechargeable ED may include one or more of Time of Arrival (ToA), Time of Departure (ToD), initial State of Charge (SoC), expected SoC, and EV specifications. The EV specifications may include one or more of an EV type, an on-board charger (OBC) rating, and a battery capacity.

The schedule of charging or discharging power of the rechargeable ED load may be based on an availability of the ED load and an operation mode parameter that indicates whether the ED load is drawing electricity from any of the one or more electrical chargers.

The method also may include determining the operation mode parameter.

Implementations of any of the techniques described herein may include a method, a system, a device, instructions stored on a machine-readable medium, or a control module. The details of one or more implementations are set forth in the accompanying drawings and the description below. Other features will be apparent from the description and drawings, and from the claims.

### DRAWING DESCRIPTION

FIGS. 1A, 1B, and 1C show a system that includes an electrical site.
FIG. 2 is a block diagram of a control module.
FIG. 3 is a flow chart of an example of a process for minimizing or reducing electricity costs at an electrical site that includes a charging facility for at least one electrical device (ED).
FIG. 4A shows an example of an estimated non-ED load at the electrical site of FIGS. 1A, 1B, and 1C over time.
FIG. 4B is a table that includes examples of an availability parameter (σ) and an operation mode parameter (p).
FIG. 5 is a flow chart of another example of a process for minimizing or reducing electricity costs at an electrical site that includes a charging facility for at least one electrical device (ED).

### DETAILED DESCRIPTION

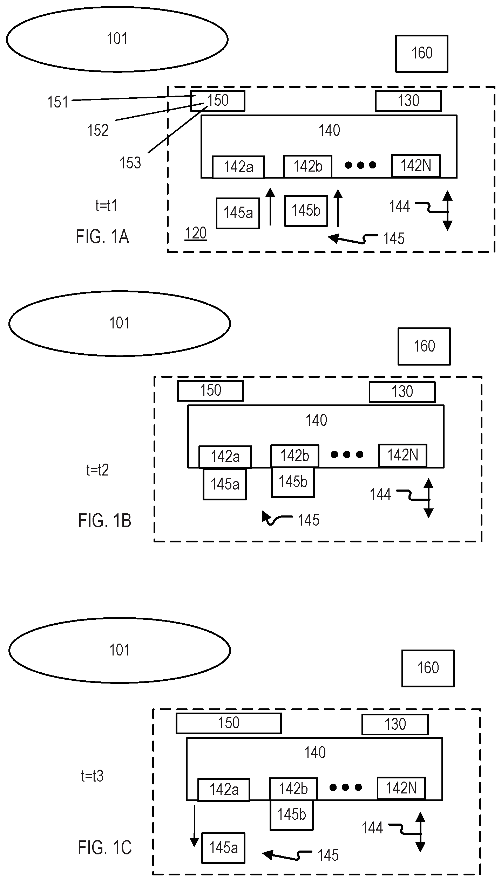

Techniques for managing and minimizing electricity costs at an electrical site 120 that has an electrical device (ED) load 144 and a controllable local power source 150 are disclosed. FIGS. 1A, 1B, and 1C show a system 100 that includes the electrical site 120 at three different times. FIG. 1A shows the system 100 at a time t1, FIG. 1B shows the system 100 at a time t2, and FIG. 1C shows the system 100 at a time t3. The electrical site 120 is any type of site that uses, generates, and/or transfers electrical power and includes an electrical charging apparatus 140. For example, the electrical site 120 may be or include residential, commercial, industrial, and/or municipal buildings and/or facilities. Specific examples of the electrical site include, without limitation, a shopping center, an office park, an electric vehicle (EV) fleet charging station, a parking garage or parking facility, and a stadium.

The electrical charging apparatus 140 has one or more charging connections 142. In the example shown, the electrical charging apparatus 140 includes N charging connections 142a to 142N. The electrical charging apparatus 140 is electrically connected to a local power source 150 and an external power source 101. The electrical charging apparatus 140 may be, for example, an electric vehicle charging infrastructure (EVCI) or any other type of charging facility that provides electrical power to a rechargeable electrical device (ED). The electrical charging apparatus 140 also may include devices and components, such as, for example, one or more bi-directional power converters, that accept electrical power from the ED. The electrical charging apparatus 140 is associated with an ED load 144. The ED load 144 is the amount of electricity provided to and/or received from electrical device(s) 145 connected to the electrical charging apparatus 140.

Electrical devices (ED) 145 are connected to and disconnected from the electrical charging apparatus 140 over time. The EDs 145 are any type of moveable or transportable device that includes an energy storage device that can be charged and discharged (for example, a battery). The EDs 145 may include, for example, electric vehicles (EVs). Examples of EVs that may connect to the charging apparatus 140 include Grid-to-Vehicle (G2V) electric vehicles and Grid-to-vehicle-Vehicle-to-grid (G2V-V2G) electric vehicles that can be controlled to charge and discharge at specific times. G2V electric vehicles can be charged by the electrical charging apparatus 140 but lack an ability to engage in a transfer of power back to the electrical charging apparatus 140.

The number and type of EDs 145 connected to the electrical charging apparatus 140 can vary over time. For example, at the time t1 (FIG. 1A), there are no EDs 145 connected to the electrical charging apparatus 140, although two EDs 145a and 145b are approaching the charging apparatus 142. At the time t2 (FIG. 1B), the EDs 145a and 145b are connected to the electrical charging apparatus 140. At the time t3 (FIG. 1C), the ED 145a has disconnected from the electrical charging apparatus 140 and the ED 145b remains connected to the electrical charging apparatus 140. Thus, each ED 145 has its own arrival time (the time at which the ED 145 is connected to the electrical charging apparatus 140) and departure time (the time at which the ED 145 is disconnected from the electrical charging apparatus 140).

Additionally, each ED 145 that is connected to the charging apparatus 140 has electrical characteristics that are not necessarily the same as the other EDs 145. Examples of characteristics of the EDs 145 include, without limitation, initial state of charge (SoC), expected SoC, electric vehicle type, on-board charger (ObC) rating, battery (or electrical storage) capacity, type of storage capacity, and energy requirement to charge the electrical storage in the device 145.

Further, characteristics related to charging or discharging the energy storage apparatus in the EDs 145 may vary among the EDs 145. For example, the EDs 145 may be treated as controllable loads or non-controllable loads. A controllable load can be controlled (for example, by a control module 160) to draw electricity from the electrical charging apparatus 140 and/or discharge electricity to the electrical charging apparatus 140 based on a schedule. A non-controllable load draws electricity from the electrical charging apparatus 140 from the time it is connected to the electrical charging apparatus 140 until fully charged or disconnected from the apparatus 140.

Whether or not the EDs 145 are controllable or non-controllable depends on the configuration of the control module 160, the preferences of the owner/operator of the site 120, and/or the availability or presence of bi-directional electrical converters in the charging apparatus 140. A particular ED 145 may be treated as controllable or non-controllable depending on the specific configuration of the charging infrastructure 140 at the site 120, the preferences of the owner and/or operator of the site 120, or the preferences of the owner and/or operator of the EDs 145. In other words, any ED 145 has the capability of being a controlled load and/or a non-controlled load.

The electrical site 120 also includes a non-ED load 130. The non-ED load 130 includes any device that uses and/or produces electricity but is not part of the ED load 144. For example, the non-ED load 130 may include buildings that house electrical equipment and permeant machinery. The non-ED load 130 also may vary over time but, unlike the ED load 144, the non-ED load 130 arises from devices that do not come and go from the electrical site 120 over the short term. The total load for the site 120 is the sum of the ED load 144 and the non-ED load 130.

The control module 160 controls the charging and/or discharging of controllable EDs 145 and/or the operation of the local power source 150 to optimize energy usage, and minimize the cost of electricity at the site 120. For example, the control module 160 may schedule charging and/or discharging of electrical storage in controllable EDs 145 based on, for example, electricity availability at the site 120 and/or cost of electricity from the external power source 101. Additionally, the control module 160 may temporarily curtail charging and/or discharging of the based on peaks and/or valleys in electricity availability. Moreover, the control module 160 may manage the consider preferences of an operator of the site 120 when managing the ED load 144.

Before discussing the control module 160 in more detail, additional information about the system 100 is provided. The external power source 101 may be, for example, a node in an electrical grid, an electrical system, or a multi-phase electrical network that provides electricity to commercial, industrial, and/or residential customers. The external power source 101 may have an operating voltage of, for example, at least 1 kV, up to 34.5 kV, up to 38 kV and may distribute electrical power that has a fundamental frequency of, for example, 50 Hertz (Hz) or 60 Hz. The external power source 101 may be transformer or voltage regulator that provides electrical power to the electrical charging apparatus 140. Moreover, the external power source 101 may include generators, power plants, wind farms, and other sources of energy. The operator of the site 120 may purchase electrical power from the owner of the external power source 101 and/or sell electrical power to the owner of the external power source 101.

The local power source 150 is any power source that is within the site 120 and/or controllable by the control module 160. The local power source 150 also provides power to the site 120. The local power source 150 may be an independent power source that does not send electrical power to or receive electrical power from the external power source 101, or the local power source 150 may be connected to the external power source 101. The local power source 150 may be, for example, a spot or area network, a power plant, a generator, one or more distributed energy resources (DERs), one or more fuel cells, and/or an electrical storage apparatus (such as a battery). Examples of DERs include, without limitation, a solar energy system that includes an array of photovoltaic (PV) devices that convert sunlight into electricity, biomass generators, gas turbines, fuel cells, and wind-based energy systems. In the example of FIGS. 1A-1C, the local power source 150 includes a battery system 151, a generator system 152, and DER system 153. The battery system 151 may store energy produced by the generator 152, the DER system 153, and/or the external power source 101.

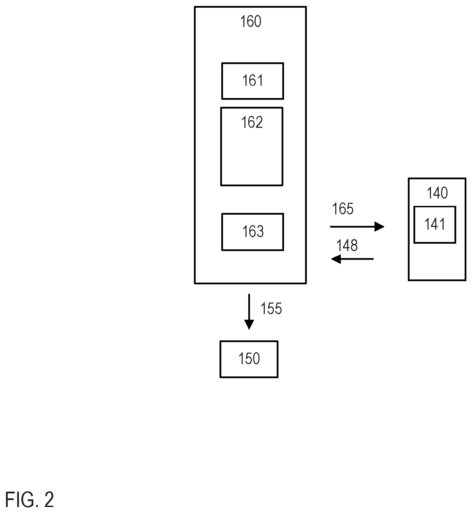

FIG. 2 is a block diagram of the control module 160. The control module 160 generates a power command 165 for a power controller 141 and a dispatch command 155 for the local power source 150. The power controller 141 controls the electrical charging apparatus 140. The dispatch command 155 controls the local power source 150.

The control module 160 includes an electronic processing module 161, an electronic storage 162, and an input/output (I/O) interface 163. The electronic processing module 161 includes one or more electronic processors. The electronic processors of the module 161 may be any type of electronic processor and may or may not include a general purpose central processing unit (CPU), a graphics processing unit (GPU), a microcontroller, a field-programmable gate array (FPGA), Complex Programmable Logic Device (CPLD), and/or an application-specific integrated circuit (ASIC).

The electronic storage 162 may be any type of electronic memory that is capable of storing data and instructions in the form of computer programs or software, and the electronic storage 162 may include volatile and/or non-volatile components. The electronic storage 162 and the processing module 161 are coupled such that the processing module 161 is able to access or read data from and write data to the electronic storage 162.

The electronic storage 162 stores executable instructions in the form of commands, functions, subroutines, and/or software. The instructions include software for controlling the electrical charging apparatus 140. For example, the instructions may include a charge network manager that allows the owner and/or operator of the site 120 to oversee the electrical charging apparatus 140 through data outputs such as graphical displays and charts and to determine whether to treat EDs 145 as controllable loads or non-controllable loads. The charge network manager also allows the owner and/or operator of an ED 145 or a fleet of EDs 145 to indicate whether or not the ED 145 is to be treated as a controllable or non-controllable load.

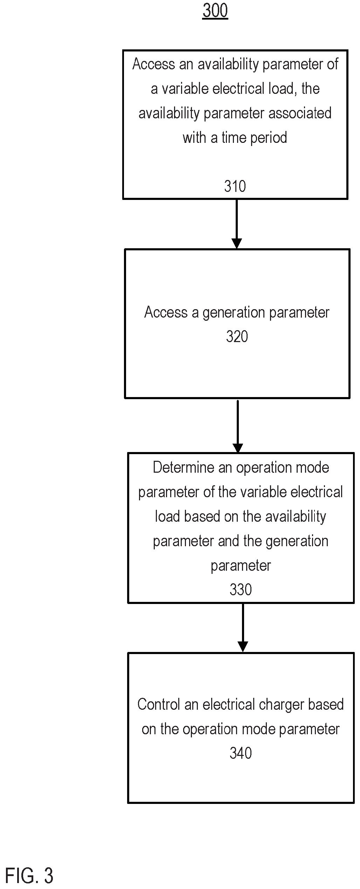

The instructions include instructions, that when executed, manage a variable load by scheduling the discharge and/or charging of controllable EDs 145 to manage the ED load 144 at the site 120. For example, the electronic storage 162 stores instructions that, when executed, cause the processing module 161 to perform a process to minimize electricity costs at a site by controlling an electrical charger (such as the electrical charging apparatus 140) as discussed with respect to the process 300 (FIG. 3).

Additionally, the electronic storage 162 stores data related to the site 120. For example, the electronic storage 162 stores historical load profiles of the ED load 144 and the non-ED load 130. The historical load profiles include a metric of load (for example, in kilowatt (kW)) of each of the ED load 144 and the non-ED load 130 over time. The electronic storage 162 also may store information that identifies some of the charging connections 142 as high-priority charging connections. Furthermore, the electronic storage 162 may store information about incentives, coupons, and/or tariffs associated with the external power source 101.

The I/O interface 163 allows the control module 160 to communicate with an operator and/or a separate device. For example, the I/O interface 163 may allow owners/operators of the EDs 145 to enter input data 148. The input data 148 includes, for example, an expected time of departure from the site 120, an amount of charge requested (for example, full charge or partial charge), an on-board charger (OBC) rating for the ED 145, and information about the ED 145. In some implementations, the owner/operator of the EDs 145 also may indicate whether or not the ED or EDs under their control are to be treated as controllable loads or non-controllable loads.

The I/O interface 163 may include any interface that allows a human operator, the ED 145, and/or an autonomous process to interact with the control module 160. The I/O interface 163 may include, for example, a display (such as a liquid crystal display (LCD)), a keyboard, audio input and/or output (such as speakers and/or a microphone), visual output (such as lights, light emitting diodes (LED)) that are in addition to or instead of the display, serial or parallel port, a Universal Serial Bus (USB) connection, and/or any type of network interface, such as, for example, Ethernet. The I/O interface 163 also may allow communication without physical contact through, for example, an IEEE 802.11, Bluetooth, or a near-field communication (NFC) connection. Additionally, the I/O interface 163 may be configured to connect to sensors that can detect the presence or absence of the ED 145. Examples of such sensors include cameras, proximity sensors, and pressure sensors.

The I/O interface 163 also allows the control module 160 to communicate with remote and external systems. For example, the I/O interface 163 may communicate with an application on a user's smart phone such that the owner or operator of the ED 145 can enter information about the ED 145 and/or their planned stay at the site 120 through the application. The control module 160 may be, for example, operated, configured, modified, or updated through the I/O interface 163. For example, the I/O interface 163 may include a communications interface that allows communication between the control module 160 and a remote station, or between the control module 160 and a separate electrical apparatus in the power system 100 (FIG. 1) using, for example, the Supervisory Control and Data Acquisition (SCADA) protocol or another services protocol, such as Secure Shell (SSH) or the Hypertext Transfer Protocol (HTTP).

Moreover, the control module 160 generates the power command 165 and provides it to the power controller 141 of the electrical charging apparatus 140 through the I/O interface 163. The power controller 141 is any kind of control module or logic capable of operating the electrical charging apparatus 140 in response to the power command 165. The power controller 141 may be an ON/OFF controller that can either be ON or OFF. When the power controller 141 is ON, it provides electrical power, and when the power controller is OFF, it does not provide or receive electrical power. In these implementations, the power command 165 is used to turn the power controller 141 ON or OFF. The power controller 141 may be a linear controller. In these implementations, the power command 165 determines how much of a maximum amount of electricity that the electrical charging apparatus 140 provides or receives.

The power command 165 is any kind of signal that includes information sufficient to control the electrical charging apparatus 140. The control module 160 also may receive some or all the input data 148 from the power controller 141 of the electrical charging apparatus 140. For example, the I/O interface 163 may automatically read information from a rechargeable electrical device electrically connected to the charging apparatus 140 through the I/O interface 163. For example, the SoC, OBC, and/or a unique identifier of a connected ED 145 may be obtained through the electrical charging apparatus 140.

FIG. 3 is a flow chart of a process 300. The process 300 is an example of a process for minimizing or reducing electricity costs at a site that includes a charging facility for controllable EDs. The process 300 provides an approach for coordinating charging of controllable EDs at an electrical site, such as the site 120. The process 300 may be implemented as a collection of executable instructions stored on the electronic storage 162. The process 300 is discussed with respect to the site 120 and the control module 160 but may be performed at any electrical site that includes an electrical charger with a variable load.

The process 300 is performed over a scheduling window (ts). The scheduling window (ts) is a time period that occurs in the future. One or more EDs 145 are connected to the electrical charging apparatus 140 during the scheduling window (ts). The control module 160 optimizes the charging and/or discharging of the ED(s) 145 that are connected to the electrical charging apparatus 140 during the scheduling window (ts) to minimize or reduce electricity costs and/or usage at the site 120.

An availability parameter (σ) of a ED 145 is accessed (310). The availability parameter (σ) is associated with a time period (tp) that begins at a first time and ends at a second time. The first time is a time at which a controllable ED 145 is electrically connected to the electrical charging apparatus 140 and the second time is a time at which the ED 145 is disconnected from the electrical charging apparatus 140. The first time may be referred to as a time of arrival (ToA) and the second time may be referred to as a time of departure (ToD). The first time occurs before the second time. The operator or owner of the ED 145 may enter the first time and the second time into the control module 160 using the I/O interface 263. In some implementations, the first time may be detected by a sensor connected to the I/O interface 263 instead of being manually entered by the user.

In the process 300, the ED 145 is treated as a controllable device in that the charging and/or discharging of the energy storage device in the device 145 can be selectively controlled at different times within the time period (tp). The ED 145 may be, for example, a V1G or V2G EV.
The time period (tp) is coextensive with or within the scheduling window (ts). That is, the time period (tp) may be the same as the scheduling window (ts) or may be a time period that is shorter than the scheduling window (ts). As discussed above, more than one ED 145 may be connected to the electrical charging apparatus 140 during the scheduling window (ts). Each ED 145 has as associated time period (tp) that may or may not be the same as the time period (tp) of any of the other EDs 145. For example, the scheduling window (ts) may be set to be the next 24 hour period beginning at 6 am. During the scheduling window (ts), a first ED 145 is connected to the charging apparatus 140 from 8am to 2pm, and a second ED 145 is connected to the charging apparatus 140 from 10am to 1pm. In this example, the scheduling window (ts) remains fixed at a particular 24-hour period, the first ED 145 has a tp1 of 6 hours, and the second ED 145 has a tp2 of 3 hours. The time periods tp1 and tp2 are within the scheduling window (ts) and have some temporal overlap but tp1, tp2, and ts are not the same. However, the time period (tp) may be the same as the scheduling window (ts). For example, one or more EDs 145 may be connected to the electrical charging apparatus 140 for the entire 24-hour scheduling window (ts).

A generation parameter associated with the scheduling window (ts) is accessed (320). The generation parameter is an indication of the amount of electrical energy available or expected to be available at the site 120 during the scheduling window (ts). The generation parameter is based on the amount of electrical energy available at the local power source 150 and/or the amount of electrical energy available from the external power source 101 accounting for the non-ED load 130 at the site 120. The amount of electrical energy expected to be available over the scheduling window (ts) is based on historical information and/or a forecasted estimate. The power balance at the electrical site 120 may be expressed as Equation (1): $Generation \left(total, t\right) - Load \left(total, t\right) = 0$ Equation (1), where t is a time in the scheduling window (ts), Generation(total,t) is the total amount of electrical energy available at the site 120 at a time t, and Load (total,t) is the total electrical load at the site 120 at the time t. The value Generation (total,t) is the generation parameter at a particular time t within the scheduling window (ts). The Load at the site 120 is the sum of the non-ED load 130 and the ED load 144. The Load(total,t) may be expressed as Equation (2): $Load \left(total, t\right) = Load \left(building, t\right) + Load \left(variable, t\right)$ Equation (2), where Load(building,t) is the non-ED load 130 and Load(variable,t) is the ED load 144 at the time t. The Load(building, t) is estimated over the scheduling window (ts) based on historical data. The Load(variable, t) is controlled to minimize the total cost of electricity at the site 120.

To minimize a cost of electricity used at the electrical site 120, a cost objective that represents the cost of electricity at the site 120 is minimized subject to the power balance of Equation (1). The cost objective is expressed in Equation (3): $\begin{matrix}cost objective \\ = {\sum }_{t} {\sum }_{g} G enerator cost \\ + {\sum }_{t} {\sum }_{s} Storage cost + {\sum }_{t} Grid cost + {\sum }_{t} Penalty cost\end{matrix}$ Equation (3), where the generator cost is the total cost of generating local electrical power from all of the local sources (1 to g) in the generator system 152 over the scheduling window (ts), the storage cost is the total cost of storing electrical power at all storage facilities (1 to s) battery system 151 at the site 120 over the scheduling window (ts), the grid cost is the cost of electricity from the external source 101 over the scheduling window (ts), and the penalty cost is the total of any penalties over the scheduling window (ts). Penalties may include, for example, extra monetary charges levied by the operator of the external power source 101 for consuming power during a peak-demand period. The costs may be expressed in, for example, monetary cost per kilowatt hour (kWh).

An operation mode parameter (p) for the ED 145 is determined (330). The operation mode parameter indicates whether a controllable ED 145 is charged by the electrical charging apparatus 140 at each of a plurality of times within the time period (tp). In implementations in which the ED 145 is able to provide electricity to the charging apparatus 140, the operating mode parameter indicates whether the ED 145 is charging or discharging at each time during the time period (tp). The operation mode parameter (p) is determined by minimizing the cost objective in Equation (3) subject to the power constraint in Equation (1). The ED load 144 for a scenario in which an integer number n EDs 145 connect to and/or disconnect from the electrical charging apparatus 140 during the scheduling window (ts) may be represented as shown in Equation (4): $Load \left(variable, t\right) = {\sum }_{n} \left({σ}_{n , t}\right) \left({ρ}_{n , t}\right) \left({OBC}_{n}\right)$ Equation (4), where t is a time within the scheduling window (ts), n is an integer number greater than or equal to 1 that indexes the controllable ED 145 connected to the electrical charging apparatus 140 at the time t, and Load(variable,t) is the ED load 144 at time t. In Equation (4), σ(n,t) is the availability parameter accessed at (310) for the nth ED 145 at the time t, p(n,t) is the operational mode parameter (p) for the nth ED 145 at the time t, and OBC(n) is the on-board charger rating of the nth ED 145. The availability parameter (σ) for any ED 145 is zero outside of the time period (tp) associated with that ED 145. Thus, if there are no EDs 145 connected to the charging apparatus 140 at a particular time t in the scheduling window (ts), the ED load 144 at that time would be zero.

The values of the availability parameter (σ) and the OBC in Equation (4) are known, and the fixed load (Load(building,t)) shown in Equation (2) is known and/or predicted based on historical data. Moreover, the cost of each contributor to the cost objective of Equation (3) is known or can be determined based on the fixed load at each time step during the time period (tp). Thus, the value(s) of the operation mode parameter (p) over the time period (tp) for each ED 145 that minimizes the cost objective of Equation (3) can be determined.

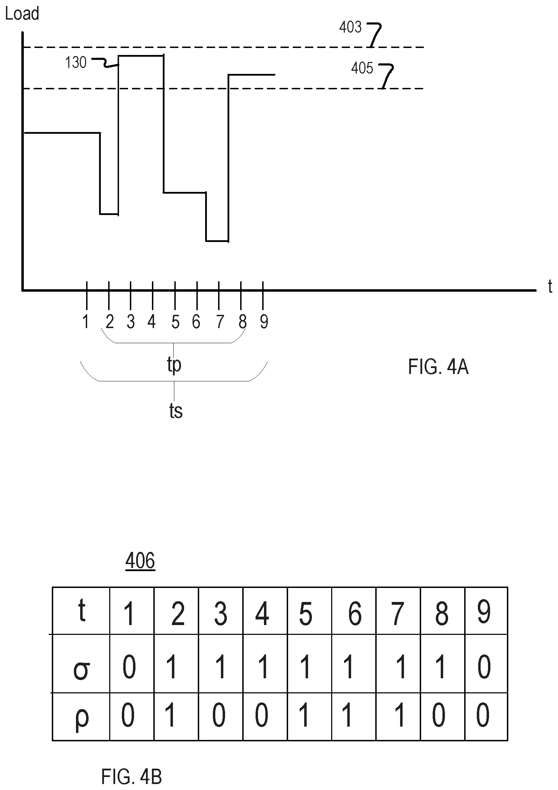

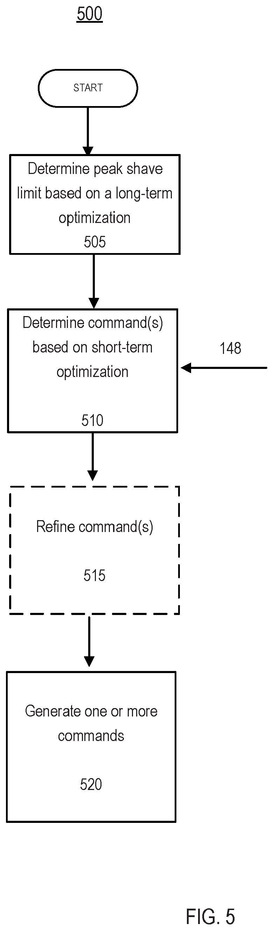

An example of determining the operational mode parameter (p) that minimizes the cost objective of Equation (3) over a scheduling period (ts) by optimizing the charging of one ED 145 is discussed with respect to FIGS. 4A and 4B. FIG. 4A shows an example of the estimated non-ED load 130 at the site 120 over time. The estimate of the non-ED load 130 may be in units of kW and may be based on historical data stored on the electronic storage 162. FIG. 4A also shows a site threshold 405. In this example, the site threshold 405 is an amount of electricity in kWh that the operator of the site 120 prefers not to exceed. For example, the site threshold 405 may be an amount that, above which, the operator of the site 120 will likely incur penalty costs. The site threshold 405 may be a peak shave limit determined prior to the initiation of the process 300. An example of determining the peak shave limit is discussed below with respect to FIG. 5.

Referring to FIG. 4A, the scheduling period (ts) is a time period that begins at the time 1 and ends at the time 9. A controllable ED 145 is connected to the electrical charging apparatus 140 at a time 2. FIG. 4B is a table 406 that shows an accessed availability parameter (σ) for the ED 145. In this example, the power controller 141 is configured as an ON/OFF charger. The controllable ED 145 is not connected to the electrical charging apparatus 140 at time 1. The ED 145 is connected to the electrical charger at the time 2. The operator or owner of the ED 145 provides the departure time and information about the OBC to the control module 160 through the I/O interface 263. In this example, the departure time is time 8. Thus, the time period (tp) is the time beginning at time 2 and ending at time 8, as shown in FIG. 4A.

The control module 160 accesses a generation parameter associated with the scheduling window (ts). As discussed above, the generation parameter represents an estimate or other indication of the amount of energy available at the electrical site 120 over the scheduling window (ts). The energy available at the electrical site 120 may be from the external power source 101 and/or from the local power source 150. In the example of FIG. 4A, the available energy over the scheduling window (ts) is labeled as 403. The estimated available energy 403 is shown as constant in the example of FIG. 4A and the generation parameter is constant over the scheduling window (ts) and the time period (tp), but the generation parameter may vary over time in other examples.

The control module 160 determines the operational mode parameter (p) over the time period (tp) based on the availability parameter (σ) and the generation parameter. In the example of FIG. 4, the estimated non-ED load 130 is expected to be below the site threshold 405 at the time 2, indicating that excess electricity is expected at the site 120 at the time 2. Thus, the operational mode parameter at the time 2 is set to 1, indicating that the energy storage apparatus in the ED 145 will receive electrical charge from the electrical charging apparatus at the time 2. However, at the time 3, the estimated non-ED load 130 is above the site threshold 405, indicating that there is little spare electricity at the site 120 and additional costs are expected to be incurred at the time 3. Thus, the operational mode parameter (p) at the time 3 is set to 0, meaning that the energy storage apparatus in the ED 145 will stop receiving charge from the electrical charging apparatus at the time 3. By not charging the ED 145 at the time 3, the overall load of the site 120 is reduced and excess fines and/or costs may be avoided or reduced. The operational mode parameter (p) remains at 0 until the time 5, when the estimated ED load 103 again drops below the site threshold 405 and the operational mode parameter (p) is set to 1. The operational mode parameter (p) remains at 1 until the time 8, when it is again set to 0. The ED 145 disconnects from the charging apparatus 140 after the time 8. After the time 8, the control module 160 does not control the ED 145 even though the scheduling window (ts) continues until time 9.

Other implementations are possible. For example, the operation mode parameter (p) shown in FIG. 4B is for an ON/OFF controller. In implementations in which the power controller 141 is configured as a linear controller, the ED 145 is capable of providing electricity to the charging apparatus 140, and the charging apparatus 140 is capable of accepting electricity from the ED 145, the value of the operation mode parameter (p) may vary between -1 and 1, with a -1 value at a time t indicating that the ED 145 will provide maximum discharge back to the electrical charging apparatus 140 at the time t and a 1 value indicating that the ED 145 will draw maximum electrical charge from the electrical charging apparatus 140 at the time t. Additionally, a criterion other than the site threshold 405 may be used to determine the operational mode parameter (p) and the site threshold 405 is not necessary to determine the operational mode parameter. For example, in some implementations, the operational mode parameter is determined based on the available energy 403 without consideration of any site threshold. Moreover, the values of the operational mode parameter of 0 and 1 are provided as examples and other values may be used.

Returning to FIG. 3, the electrical charging apparatus 140 is controlled based on the operational mode parameter (340). Continuing with the example shown in FIG. 4B, at the time 2, the control module 160 generates the power command 165 with the information shown in FIG. 4B. In this example, the power command 165 controls the electrical charging apparatus 140 as follows: electricity is provided to the energy storage apparatus in the controllable ED 145 until the time 3; at the time 3, the electrical charging apparatus 140 transitions to not provide electrical charge to the energy storage apparatus in the ED 145 until the time 5; at the time 5, the electrical charging apparatus 140 provides electrical charge to the energy storage apparatus in the ED 145 until time 8; at the time 8, the electrical charging apparatus 140 does not provide electrical charge to the energy storage apparatus in the ED 145.

FIG. 5 is a flow chart of a process 500. The process 500 is an example of a process for minimizing or reducing electricity costs at an electrical site that includes a charging facility for at least one electrical device (ED). The process 500 may be implemented as a collection of executable instructions stored on the electronic storage 162. The process 500 is discussed with respect to the control module 160 and the site 120 but may be performed with any electrical site that includes a charging facility for ED. The process 500 may be used to minimize costs for an electrical site regardless of whether the electrical site has a controllable or non-controllable ED load.

The process begins by determining a peak shave limit (505). The peak shave limit is determined or estimated using a long-term optimization over a future period of time or a future time window, as discussed below. The peak shave limit is the upper limit or maximum amount of real power that the site 120 will obtain from the external power source 101 over the future time window. The future time window may be, for example a month ahead or a month from the current time. Other time windows may be used. For example, the future time window may be a week ahead. The ED load 144 may be controllable or non-controllable. The approach for determining or estimating the peak shave limit for the non-controllable ED load 144 is discussed first.

If the ED load 144 is non-controllable, the peak shave limit is determined based on historical load data, which may be stored on the electronic storage 162. The historical load data includes historical load data for the ED load 144 and the non-ED load 130. Estimated temporal profiles of the ED load 144 and the non-ED load 130 over the future time window are estimated from the historical ED variable load data. The estimated ED load 144 over the future time window is superimposed or added to the estimated non-ED load 130 over the future time window to determine the total estimated load for the site 120 over the future time window.

Additional estimates for the site 120 over the future time window are also determined. For example, an estimate of an amount of energy expected to be produced by the local power source 150 over the future time window is determined from historical data related to the local power source 150, which may be stored on the electronic storage 162. Moreover, the costs of electricity from the external source 101 over the future time period may be obtained from historical data on the electronic storage 162 and/or from the owner/operator of the external source 101. The estimated cost of electricity from the external source 101 may vary based on, for example, tariffs, taxes, and/or surcharges applied during peak demand periods.

The total estimated cost of electricity at the site 120 over the future time window is expressed in Equation (5): $\begin{matrix}cost = {\sum }_{t} {\sum }_{g} G enerator cost \\ + {\sum }_{t} {\sum }_{s} Storage cost + {\sum }_{t} Grid cost + {\sum }_{t} Penalty cost\end{matrix}$ where generator cost is the total cost of generating local electrical power from all of the local sources (1 to g) in the generator system 152 over the future time window, the storage cost is the total cost of storing electrical power at all storage facilities (1 to s) in the battery system 151 over the future time window, the grid cost is the cost of electricity from the external source 101 over the future time window, and the penalty cost is the peak shave limit (to be determined) multiplied by a demand charge. The demand charge may be, for example, a surcharge or a tariff that the operator of the external source 101 charges when the peak shave limit is met or exceeded. The cost determined by Equation (5) may be expressed in, for example, monetary unit per kilowatt hour (kWh). The monetary unit may be any type of currency used for purchasing goods. For example, the monetary unit may be U.S. dollars (USD).

Equation (6) shows the cost expressed in Equation (5) in greater detail: $\begin{matrix}{\sum }_{t} {\sum }_{g} \left({C}_{fuel , g}\times {P}_{gen , t , g}\times \frac{1}{res}.\right) + {\sum }_{t} {\sum }_{s} \left({C}_{SD , s}\times {P}_{SD , t , s}\times \frac{1}{res}.\right) \\ + {\sum }_{t} \left({C}_{grid , t}\times {P}_{grid , t}\times \frac{1}{res .}\right) + \left({P}_{grid , max}\times Demand charge\right)\end{matrix}$ In Equation (6) where C(fuel,g) is the operating cost of the gth generator in the generator system 152, P(gen,t,g) is the power generated at the gth generator in the generator system 152 at the time t, res is the resolution of the optimization, C(sd,s) is the cost of discharge from the sth storage device in the battery system 151, P(SD,t,s) is the real power discharge from the sth storage device in the battery system 151, C(grid,t) is the cost of power from the external source 101 at the time t, P(grid,t) is the amount of real power from the external source 101 at the time t, and P(grid, max) is the peak shave limit (to be determined).

The power balance constraint for the site 120 in the non-controllable ED load 144 scenario is as shown in Equation (7): ${\sum }_{g} \left({P}_{gen , t , g}\right) + {\sum }_{s} \left({P}_{SD , t , s}\right) - {\sum }_{s} \left({P}_{SC , t , s}\right) + {P}_{PV , t} - {Load}_{t} + {P}_{grid , t} = 0$ In Equation (7): ${Load}_{t} = {Load}_{base , t} + {Load}_{ED , t}$ Equation (8), In Equations (7) and (8), t indexes time during the future time window, P(PV,t) is the real power available from a solar panel or other DER in the DER system 153 at the time t, Load(t) is the total estimated load at the site 120 at a time t, Load(base,t) is the estimated non-ED load 130 at time t, Load(ED,t) is the estimated ED load 144 at time t.

To determine the peak shave limit, Equation (6) is optimized to perform peak shaving and energy arbitrage by optimally utilizing the local power source 150 in view of the forecasted cost of energy from the external source 101 and the forecasted total load at the site 120 over the future time window. For example, the cost function of Equation (6) is minimized by charging the battery 151 using electricity from the external source 101 during periods when the cost of electricity from the external source 101 is predicted to be low and discharging the battery 151 to provide power to the site 120 during periods when the cost of electricity from the external source 101 is predicted to be high. The peak shave limit is varied to determine the optimal peak shave limit that results in Equation (6) being minimized over the future time period. For example, the value of the peak shave limit that corresponds to the maximum amount of real power that will be obtained from the external power source 101 over the future time window after minimizing Equation (6) subject to the power balance constraint of Equation (7) is the determined peak shave limit.

The above discussion relates to the ED load 144 being a non-controllable load. However, the process 500 may be used for a controllable ED load 144, as discussed next. The estimation of the peak shave limit for a controllable ED load 144 is similar to the estimation for a non-controllable load except the power balance constraint for the controllable ED load 144 accounts for the ability to control the discharging and charging of the controllable EDs 145 that make up the ED load 144 through the operation mode parameter (p). The cost function for the controllable ED load 144 is shown in Equation (6) above. The cost function in Equation (6) is minimized subject to the constraint shown in Equation (9): ${\sum }_{n} \left({P}_{gen , t , n}\right) + {\sum }_{s} \left({P}_{SD , t , s}\right) - {\sum }_{s} \left({P}_{SC , t , s}\right) - {\sum }_{z} {P}_{z , t} + {P}_{PV , t} - {Load}_{base , t} + {P}_{grid , t} = 0$ In Equation (9), z is an integer that is greater than or equal to one and indexes the controllable ED 145 that are connected to the electrical charging apparatus 140, and P(z,t) is the charging power or discharging power of the zth controllable ED 145 at the time t. The charging or discharging power P(z,t) is expressed as shown in Equation (10): $P \left(z, t\right) = {\sum }_{z} \left({σ}_{z , t}\right) \left({ρ}_{z , t}\right) \left({OBC}_{z}\right)$ , where t indexes the time in the future time window, z indexes the controllable ED 145, σ is an availability parameter that is equal to 1 when the ED 145 is connected to the electrical charging apparatus 140 and 0 when the ED 145 is not connected to the electrical charging apparatus 140, p is the operation mode parameter, and OBC is the on-board charger (OBC) rating of the ED 145. The time at which the zth ED 145 connects to the electrical charging apparatus 140 is also referred to as the time of arrival (ToA) of the zth ED 145 and the time at which the zth ED 145 disconnects from the electrical charging apparatus 140 is the time of departure (ToD) of the zth ED 145. The zth ED 145 is connected to the electrical charging apparatus 140 for the time between ToA and ToD.

The operation mode parameter (p) indicates whether the ED 145 is receiving charge from the electrical charging apparatus 140. In implementations in which the power controller 141 is configured for linear power control and the ED 145 is not able to provide charge to the electrical charging apparatus 140, the operation mode parameter (p) is a value between 0 and 1, with 0 indicating no charge is provided to the ED 145 and 1 indicating that maximum charge is being provided to the ED 145. If the ED 145 is able to charge and discharge, the operation mode parameter (p) has a value between -1 and 1. In implementations in which the power controller 141 is configured as an ON/OFF charger, the operation mode parameter (p) is either 0 or 1, with 0 indicating the that the ED 145 does not receive charge from the electrical charging apparatus 140 and 1 indicating that the ED 145 receives charge from the electrical charging apparatus 140. The value of the operation mode parameter (p) is 0 at times that do not fall between the ToA and ToD.

To determine the peak shave limit, Equation (6) is optimized to perform peak shaving and energy arbitrage by optimally utilizing the local power source 150 in view of the forecasted cost of energy from the external source 101 and by optimally controlling and scheduling the charging and discharging of the z EDs 145 over the future time window using the operation mode parameter (p). For example, the cost function of Equation (6) is minimized by charging the battery 151 and connected devices 145 using electricity from the external source 101 during periods of predicted cost electricity from the external source 101 and discharging the battery 151 and at least some of the z connected EDs 145 to provide power to the site 120 during periods of predicted high cost electricity from the external source 101. The maximum amount of real power that will be obtained from the external power source 101 over the future time window after minimizing Equation (6) subject to the power balance constraint of Equation (9) is the peak shave limit.

The peak shave limit may be updated periodically and more often than the duration of the future time window. For example, in implementations in which the future time window is one month, the peak shave limit may be updated each day, every 12 hours, or each week. Moreover, in some implementations, the peak shave limit may be updated in a non-periodic manner and/or in response to a request from the operator or owner of the site 120.

After determining the peak shave limit, command(s) are determined based on a short-term optimization (510). The peak shave limit is an input parameter to the short-term optimization and may be used as a constraint in the short-term optimization. The command(s) determined from the short-term optimization include the power command 165 and/or the dispatch command 155. The short-term optimization is performed as a real-time or near real-time optimization over a real-time window. For example, the future time window for the peak shave estimate in may be a month ahead, and the short-term or real-time window may be 15 minutes such that the command(s) are determined every 15 minutes.

The situation in which the ED load 144 is a non-controllable load is discussed first. When the ED load 144 is a non-controllable load, the power command 165 is not determined because the ED load 144 is not controllable.

The historical charging data for the ED load 144 is accessed and used to forecast the ED load 144 over time real-time window. The estimate of the future ED load 144 may be determined using the historical data of the actual ED load 144 and a machine learning technique. Examples of a machine learning technique that may be used include K-Nearest Neighbors (KNN), Support Vector Machine (SVM), and Random Forest (RF). The forecasted ED load 144 along with the forecasted non-ED load 130, local power source 150 availability and costs, and tariffs and penalties associated with the external source 101 are used as inputs to a real-time or near real-time optimization that determines dispatch commands 155 to control the local power source 150 in a manner that minimizes the cost of electricity at the site 120. The cost objective for the real-time optimization is provided by Equation (11): $\begin{matrix}{f}_{1} = {\sum }_{t} {\sum }_{g} \left({C}_{fuel , g}\times {P}_{gen , t , g}\times 1/r es.\right) + {\sum }_{t} {\sum }_{s} \left({C}_{SD , s}\times {P}_{SD , t , s}\times 1/r es.\right) \\ + {\sum }_{t} \left({C}_{grid , t}\times {P}_{grid , t}\times \frac{1}{res}.\right) + {\sum }_{t} \left(delt{a}_{t}\times 100\right)\end{matrix}$

In Equation (11), t is a time in the real-time window, C(fuel,g) is the operating cost of the gth generator in the generator system 152, P(gen,t,g) is the power generated at the gth generator in the generator system 152 at the time t, res is the resolution of the optimization, C(sd,s) is the cost of discharge from the sth storage device in the battery system 151, P(SD,t,s) is the real power discharge from the sth storage device in the battery system 151, C(grid,t) is the cost of power from the external source 101 at the time t, P(grid,t) is the amount of real power from the external source 101 at the time t, and delta(t) is the penalty variable that represents a penalty that is applied if the total load at the site 120 exceeds the peak shave limit determined in (505) at the time t. The resolution of the optimization (res) is a factor to convert power to energy based on the resolution of input data and/or the resolution of the time period in the optimization. The resolution may be, for example, on the order of minutes. Specific examples of the value of the resolution include 5, 10, or 15 minutes.

The cost objective of Equation (11) is minimized subject to the power balance constraint shown in Equation (12): ${\sum }_{n} \left({P}_{gen , t , n}\right) + {\sum }_{s} \left({P}_{gen , t , s}\right) - {\sum }_{s} \left({P}_{SC , t , s}\right) + {P}_{PV , t} - Loa {d}_{t} + {P}_{grid , t} = 0$ , where Load(t) is the total load at the site 120 at a time t in the real-time window. A dispatch command 155 is determined at each time t in the real-time window by minimizing the cost function in Equation (11) subject to the constraint of Equation (12). For example, the dispatch command 155 may be a command that causes the battery system 151 to discharge energy and to command the DER system 153 to produce energy to power the site 120 at times in the real-time window when the difference between the peak shave limit and the total load at the site 120 is small and to store energy from the external source 101 in the battery system 151 when the difference between the peak shave limit and the total load at the site 120 is large. Because the ED load 144 is non-controllable, a power command 165 is not determined. Instead, the ED load 144 is assumed to be a time-varying load that contributes to the total load of the site 120 but cannot be directly controlled in a manner that reduces overall costs.

The generation of command(s) for a controllable ED load 144 is discussed next. For the controllable ED load 144, the power command 165 and/or the dispatch command 155 may be generated.

Input data 148 related to the controllable EDs 145 that contribute to the controllable ED load 144 is accessed. For example, the ToA, ToD, initial State of Charge (SoC), expected SoC, and ED specifications (such as, for example, ED type, OBC rating, and battery capacity). The input data may be provided by the owner/operator of the ED 145 through the I/O interface 163. In some implementations, some or all of the input data is estimated from probability density functions based on an analysis of prior mobility patterns of EDs 145 at the site 120. The forecasted non-ED load 130 over the real-time window, forecasted power from the DER system 153 and associated costs over the real-time window, and the utility tariff are considered to determine the dispatch command 155 and/or power command 165. Moreover, incentives for users with V2G capability are considered. For example, the owner and/or operator of the site 120 may offer incentives to users that own and/or operate an ED 145 with V2G capabilities to encourage these V2G EDs 145 to visit the site 120. The incentives may come at a cost to the owner and/or operator of the site 120 but encourage user engagement and cooperation. The incentive may take any value and may be determined through agreement between the owner and/or operator of the V2G ED and the owner and/or operator of the site 120.

The cost objective for the real-time optimization of a controllable ED load 144 is provided by Equation (13): $\begin{matrix}{f}_{1} = {\sum }_{t} {\sum }_{g} \left({C}_{fuel , g}\times {P}_{gen , t , g}\times 1/r es.\right) + {\sum }_{t} {\sum }_{s} \left({C}_{SD , s}\times {P}_{SD , t , s}\times 1/r es.\right) \\ + {\sum }_{t} \left({C}_{grid , t}\times {P}_{grid , t}\times \frac{1}{res}.\right) + {\sum }_{t} \left(delt{a}_{t}\times 100\right) - {\sum }_{t} {\sum }_{z} \left({P}_{z , t}\times Incentive\times \frac{1}{res}.\right)\end{matrix}$

Equation (13) is the same as Equation (11) except it includes the right-most incentive term. The incentive term is the product of P(z,t), which is the charging or discharging power of the zth controllable ED 145 at the time t given by Equation (10), and an incentive metric (incentive). Moreover, the incentive may be used to encourage owners of certain types of EDs (for example, V2G EDs) to visit the site 120. The cost savings achieved by the incentive may be returned to the owner/operator of the controllable ED 145 or split between the owner/operator of the ED 145 and the owner/operator of the site 120. The other variables in Equation (13) are as discussed above with respect to Equation (11).

To determine the power command 165 and/or the dispatch command 155, the cost objective in Equation (13) is minimized subject to the controllable ED power balance constraint shown in Equation (14): ${\sum }_{n} \left({P}_{gen , t , n}\right) + {\sum }_{s} \left({P}_{SD , t , s}\right) - {\sum }_{s} \left({P}_{SC , t , s}\right) - {\sum }_{z} {P}_{z , t} + {P}_{PV , t} - Loa {d}_{t} + {P}_{grid , t} = 0$

Equation (14) is the same as the non-controlled ED power balance constraint of Equation (12), except the controllable ED power balance constraint of Equation (14) considers the charging and/or discharging power of the controllable EDs 145 by including the P(z,t) term. In Equation (14), P(z,t) is the charging or discharging power of the zth controllable ED 145 at the time t, Load(t) is the total load at a time t in the real-time window. A dispatch command 155 and/or a power command 165 is determined at each time t in the real-time window by minimizing the cost function in Equation (13) subject to the constraint of Equation (14). For example, the dispatch command 155 may be a command that causes the battery system 151 to discharge energy and to command the DER system 153 to produce energy to power the site 120 at times in the real-time window when the total load at the site 120 is close to the peak shave limit and to store energy from the external source 101 in the battery system 151 when the total load at the site 120 is well below the peak shave limit.

As discussed above in Equation (10), the charging or discharging power of a particular controllable ED 145 at a particular time t depends on the availability parameter (σ) of the ED 145, the on-board charger (OBC) rating, and the operating mode parameter (p). The availability parameter (σ) is set to a first value (for example, 1) when the ED 145 is connected to the electrical charging apparatus 140 and to a second value (for example, 0) when the ED 145 is not connected to the electrical charging apparatus 140. The OBC is constant for a particular ED 145. The values of the availability parameter (σ) and OBC are known from the input data 148 or from information stored on the electronic storage 162.

The operating mode parameter (p) is an optimization variable that has values over time that are determined by minimizing the cost function of Equation (14). The range of possible values that the operating mode parameter (p) can have at any particular time depends on the configuration of the power controller 141 and the ED 145. For example, when the power controller 141 is a linear controller and the ED 145 is G2V-V2G EV capable of receiving electricity from the electrical charging apparatus 140 and providing electricity to the electrical charging apparatus, the value of operating mode parameter (p) can be any value between -1 and 1. When the power controller 141 is an ON/OFF controller, the value of the operating mode parameter (p) can only have one of two values: 0 or 1.

Additional factors may be considering when determining the operating mode parameter (p). For example, as shown in FIGS. 1A-1C, the electrical charging apparatus 140 includes more than one charging connection 142, and one or more of the charging connections 142 can be designated as a high-priority charging connection that are not subject to curtailment or reduction in electrical charge or are only subjected to a limited curtailment. For example, if the tenth ED 145 is a G2V-V2G EV that is connected to a high-priority charging connection, the operating mode parameter p (10,t) for the tenth ED 145 is not set to a value less than 1 until the tenth ED 145 is fully charged and no electricity is discharged from the ED 145 after it is fully charged. The operating mode parameter (p) for other connected ED 145 is adjusted such that the cost in Equation (13) is still minimized. Moreover, a high-priority charging connection may offer more flexible payment terms or other incentives to encourage ED 145 owners and/or operators to connect to the high-priority connections.

For a controllable ED load 144, the power command 165 is generated based on the information about the operating mode parameter (p77). The power command 165 is provided to the power control 141 such that the EDs 145 are charged and/or discharged as dictated by the operating mode parameter (p). The local power source 150 is also controlled according to the dispatch command 155. The generated command(s) may be referred to as a first set of commands.

The generated power command 165 and/or the generated dispatch command 155 may be refined (515). The refinement may be based on rules that are configured to account for real-time variations in the non-ED load 130, the ED load 144, and/or PV data. Real-time variations are differences between the actual data measured in real-time and the forecasted data. The rules are formulated considering the controllable and non-controllable loads at the site 120. The rules ensure that the overall control solution maximizes renewable utilization, minimize cost, and/or maximize revenue to the owner of a fleet of EDs 145.

The rules are applied to the commands generated at (510) to generate a second set or a final set of command(s). The second set of commands may include a refined power command 165 and/or a refined dispatch command 155. In implementations in which the ED load 144 is non-controllable, the rules may include specifications and/or values that define boundary conditions or operating limits for the local power source 150. The dispatch command 155 determined at (515) is compared to the rules to ensure that the dispatch command 155 would not operate the local power source 150 in a manner that is inadvisable or impossible. In this example, the dispatch command 155 is modified or replaced with a default command to ensure proper operation of the local power source 150.

The process 500 may be implemented without (515). In implementations in which the process 500 lacks (515), the command(s) generated at (510) are also the second set or final set of command(s).

The power command 165 is provided to the power controller 141 and/or the generated dispatch command 155 is provided to the local power source 150 (520).

These and other implementations are within the scope of the claims.

The following numbered clauses are also disclosed.

Clause 1. A method for managing at least one distributed energy resource (DER) and electric vehicle (EV) load at an electrical load site, the method performed by at least one processor, and the method comprising: generating an estimate of a peak shave limit at the electrical load site for a future period of time, the estimate being generated at least in part based on a fixed non-EV load and an EV load at the electrical load site, the EV load having one more characteristics that vary in time, and the EV load being one or more of a controllable load and an non-controllable load; using, in real time, at least the estimate of the peak shave limit and an EV-related data at the electric load site to dynamically forecast an optimal control of the at least one DER and an optimal control of the EV load at the electrical load site, wherein if the EV load is the controllable load, a forecast of the optimal control of the EV load considers at least charging and/or discharging characteristics of the EV load; and generating one or more dispatch commands associated with the forecast of the optimal control of the at least one DER and the optimal control of the EV load at the electrical load site, the one or more dispatch commands including at least one first dispatch command that directs the optimal control of the at least one DER at the electrical load site, and (ii) at least one second dispatch command that directs the optimal control of the EV load at the electrical load site, the optimal control of the EV load being based at least in part on scheduling of an EV charging at the electrical load site.

Clause 2. The method of clause 1, further comprising: determining whether to modify any of the one or more dispatch commands by comparing the one or more dispatch commands to one or more rules; and if any of the one or more dispatch commands do not comply with at least one rule, updating the one or more dispatch commands.

Clause 3. The method of clause 1, wherein the one or more dispatch commands are a first set of dispatch commands, and further comprising: generating a second set of dispatch commands from the first set of set of dispatch commands, the second set of dispatch commands being generated from the first set dispatch commands based on at least on one or more real-time variations of the fixed non-EV load and one or more real-time variations of the EV load.

Clause 4. A control module configured to: access an availability parameter of a rechargeable electrical device (ED), the availability parameter associated with a time period beginning at a first time and ending at a second time, wherein the first time is a time at which the rechargeable ED connects to an electrical charger at an electrical site and the second time is time at which the rechargeable ED disconnects from the electrical charger at the electrical site; access a generation parameter associated with a scheduling window, the generation parameter depending on one or more of energy available from a local power source at the electrical site over the scheduling window and energy from an external power source over the scheduling window, wherein the scheduling window comprises the time period; determine an operation mode parameter of the rechargeable ED based on the availability parameter and the generation parameter, the operation mode parameter indicating whether the rechargeable ED draws electrical energy from the electrical charger at each of a plurality of times in the time period; and control the electrical charger based on the operation mode parameter.

Clause 5. The control module of clause 4, wherein the operating mode parameter indicates whether the rechargeable ED draws electrical energy from the electrical charger or provides electrical energy to the electrical charger at each of the plurality of times in the time period.

Clause 6. The control module of clause 4, wherein the control module is further configured to access an indication of a fixed electrical load associated with the electrical site, and wherein the control module is configured to determine the operational mode parameter based on the availability parameter, the generation parameter, and the indication of the fixed electrical load.

Clause 7. The control module of clause 6, wherein the generation parameter further comprises one or more of a cost associated with the local power source at each of the plurality of times, a cost associated with the energy from the external power source at the plurality of times, and a penalty cost at the plurality of times.

Clause 8. The control module of clause 6, wherein the indication of the fixed electrical load associated with the electrical site is a forecast of the fixed electrical load over the scheduling window.

Clause 9. The control module of clause 4, wherein the control module is further configured to determine a dispatch command and to control one or more energy sources in the local power source with the dispatch command.

Clause 10. The control module of clause 4, wherein the time period and the scheduling window are coextensive.

Clause 11. A method comprising: performing an initial optimization for control of a rechargeable electrical device (ED) load at an electrical site for a future period of time, wherein the initial optimization is based at least in part on characteristics of the rechargeable ED load at the electrical site and a schedule of a charging or discharging power of the rechargeable ED load; and controlling one or more electrical chargers at the electrical load site in accordance with the schedule of the charging or discharging power of the rechargeable ED load.

Clause 12. The method of clause 11, further comprising performing an initial optimization of a control of at least one distributed energy resource (DER) at the electrical site.

Clause 13. The method of clause 11, wherein performing the initial optimization comprises estimating a peak shave limit.

Clause 14. The method of clause 13, further comprising updating the peak shave limit after a first amount of time has passed, the first amount of time is less than the future period of time and occurs before the future period of time ends.

Clause 15. The method of clause 11, wherein controlling the one or more electrical chargers comprises controlling the one or more electrical charges using one or more of a linear power control or an on-off control.

Clause 16. The method of clause 11, further comprising: performing at least peak shaving at the electrical site based on the initial optimization.

Clause 17. The method of clause 11, wherein the rechargeable ED comprises an electric vehicle (EV), and the characteristics of the rechargeable ED comprise one or more of Time of Arrival (ToA), Time of Departure (ToD), initial State of Charge (SoC), expected SoC, and EV specifications.

Clause 18. The method of clause 17, wherein the EV specifications comprise one or more of an EV type, an on-board charger (OBC) rating, and a battery capacity.

Clause 19. The method of clause 11, wherein the schedule of charging or discharging power of the rechargeable ED load is based on an availability of the ED load and an operation mode parameter that indicates whether the ED load is drawing electricity from any of the one or more electrical chargers.

Clause 20. The method of clause 19, further comprising determining the operation mode parameter.

## Claims

1. A control module configured to:
access an availability parameter of a rechargeable electrical device (ED), the availability parameter associated with a time period beginning at a first time and ending at a second time, wherein the first time is a time at which the rechargeable ED connects to an electrical charger at an electrical site and the second time is time at which the rechargeable ED disconnects from the electrical charger at the electrical site;
access a generation parameter associated with a scheduling window, the generation parameter depending on one or more of energy available from a local power source at the electrical site over the scheduling window and energy from an external power source over the scheduling window, wherein the scheduling window comprises the time period;
determine an operation mode parameter of the rechargeable ED based on the availability parameter and the generation parameter, the operation mode parameter indicating whether the rechargeable ED draws electrical energy from the electrical charger at each of a plurality of times in the time period; and
control the electrical charger based on the operation mode parameter.

2. The control module of claim 1, wherein the operating mode parameter indicates whether the rechargeable ED draws electrical energy from the electrical charger or provides electrical energy to the electrical charger at each of the plurality of times in the time period.

3. The control module of claim 1 or claim 2, wherein the control module is further configured to access an indication of a fixed electrical load associated with the electrical site, and wherein the control module is configured to determine the operational mode parameter based on the availability parameter, the generation parameter, and the indication of the fixed electrical load.

4. The control module of claim 3, wherein the generation parameter further comprises one or more of a cost associated with the local power source at each of the plurality of times, a cost associated with the energy from the external power source at the plurality of times, and a penalty cost at the plurality of times.

5. The control module of claim 3, wherein the indication of the fixed electrical load associated with the electrical site is a forecast of the fixed electrical load over the scheduling window.

6. The control module of any of claims 1 to 5, wherein the control module is further configured to determine a dispatch command and to control one or more energy sources in the local power source with the dispatch command.

7. The control module of any of claims 1 to 6, wherein the time period and the scheduling window are coextensive.

8. A method comprising:
performing an initial optimization for control of a rechargeable electrical device (ED) load at an electrical site for a future period of time, wherein the initial optimization is based at least in part on characteristics of the rechargeable ED load at the electrical site and a schedule of a charging or discharging power of the rechargeable ED load; and
controlling one or more electrical chargers at the electrical load site in accordance with the schedule of the charging or discharging power of the rechargeable ED load.

9. The method of claim 8, further comprising performing an initial optimization of a control of at least one distributed energy resource (DER) at the electrical site.

10. The method of claim 8, wherein performing the initial optimization comprises estimating a peak shave limit, and further comprising updating the peak shave limit after a first amount of time has passed, the first amount of time is less than the future period of time and occurs before the future period of time ends.

11. The method of any of claims 8 to 10, wherein controlling the one or more electrical chargers comprises controlling the one or more electrical charges using one or more of a linear power control or an on-off control.

12. The method of any of claims 8 to 11, further comprising: performing at least peak shaving at the electrical site based on the initial optimization.

13. The method of any of claims 8 to 12, wherein the rechargeable ED comprises an electric vehicle (EV), and the characteristics of the rechargeable ED comprise one or more of Time of Arrival (ToA), Time of Departure (ToD), initial State of Charge (SoC), expected SoC, and EV specifications, and optionally wherein the EV specifications comprise one or more of an EV type, an on-board charger (OBC) rating, and a battery capacity.

14. The method of any of claims 8 to 13, wherein the schedule of charging or discharging power of the rechargeable ED load is based on an availability of the ED load and an operation mode parameter that indicates whether the ED load is drawing electricity from any of the one or more electrical chargers.

15. The method of claim 14, further comprising determining the operation mode parameter.
